# EUROPEAN PATENT APPLICATION

(11) **EP 4 604 191 A1**
(43) Date of publication of application: **20.08.2025**
(21) Application number: 25152073.0
(22) Date of filing: 15.01.2025
(51) Int. Cl.: H01M 4/04, H01M 4/133, H01M 4/1393, H01M 4/587, H01M 10/0525, H01M 4/02, H01M 4/38

(54) **NEGATIVE ACTIVE PARTICLE AND PREPARATION METHOD THEREFOR, NEGATIVE SHEET, AND CELL**

(30) Priority: 01.02.2024 CN 202410142044
(71) Applicant: Hithium Tech HK Limited, Hong Kong (HK)
(72) Inventor: ZHENG, Jianming, Shenzhen 518110 (CN); PENG, Fuxi, Shenzhen 518110 (CN); HE, Chen, Shenzhen 518110 (CN); HUANG, Weimin, Shenzhen 518110 (CN); ZHANG, Qin, Shenzhen 518110 (CN)
(74) Representative: Mewburn Ellis LLP

(57) **Abstract**

The disclosure provides a negative active particle and a preparation method therefor, a negative sheet, and a cell. Embodiments of the disclosure provide a negative active particle. The negative active particle has multiple pores, and an aspect ratio *α* of each of the multiple pores satisfies 1 ≤ *α* ≤ 8. When the negative active particle provided in embodiments of the disclosure is applied to a cell, the cell has a high cycling capacity retention rate.

## Description

### TECHNICAL FIELD

The present disclosure relates to the field of energy storage, and in particular, to a negative active particle and a preparation method therefor, a negative sheet, and a cell.

### BACKGROUND

With continuous development of technologies of lithium-ion cells, the lithium-ion cells have advantages such as a large specific capacitance, no memory effect, a high operating voltage, a high charging speed, a wide operating-temperature range, a long cycle life, a small volume, and a light weight compared to other types of cells such as lead-acid cells and nickel-cadmium cells. At present, the lithium-ion cells are widely applicable in mobile phones, notebook computers, electric automobiles, energy-storage cabinets, and other fields, and have found increasingly wide utilization.

However, the cycling capacity retention rate of the current lithium-ion cells still needs to be improved.

### SUMMARY

When the negative active particle provided in embodiments of the disclosure is applied to a cell, the cell has a high cycling capacity retention rate.

In a first aspect, embodiments of the disclosure provide a negative active particle. The negative active particle has multiple pores, and an aspect ratio *α* of each of the multiple pores satisfies 1 ≤ *α* ≤ 8.

Further, a maximum length *L* of each of the multiple pores satisfies 0.1 µm ≤ *L* ≤ 2.5µm.

Further, a maximum width *w* of each of the multiple pores satisfies 0.1µm ≤ *w* ≤ 2.5µm in a direction parallel to a direction perpendicular to a direction of a maximum length of each of the multiple pores.

Further, the negative active particle has a predetermined cross-section, an area of the predetermined cross-section of the negative active particle is *s*, and a total area covered by the multiple pores on the predetermined cross-section is *s'*, where 0.01 ≤ *s'*/*s* ≤ 0.06.

Further, the area *s* of the predetermined cross-section satisfies 0.5µm² ≤ *s* ≤ 400µm².

Further, the total area *s*' covered by the multiple pores on the predetermined cross-section satisfies 0.005µm² ≤ *s*' ≤ 24µm².

In a second aspect, embodiments of the disclosure provide a preparation method for a negative active particle. The preparation method includes the following. A carbon source is provided. The carbon source is pre-treated to obtain an intermediate particle. The intermediate particle is graphitized to obtain the negative active particle, where the negative active particle has multiple pores, and an aspect ratio *α* of each of the multiple pores satisfies 1 ≤ *α* ≤ 8.

Further, a mass fraction of sulfur in the carbon source ranges from 1.5% to 2.0%.

Further, the intermediate particle is graphitized to obtain the negative active particle as follows. The intermediate particle is placed in a graphitization furnace, where the graphitization furnace has a reaction chamber and a distance between the intermediate particle and an opening of the reaction chamber ranges from 70cm to 120cm. A graphitization treatment is performed at a temperature of 2800°C to 3200°C to obtain the negative active particle.

In a third aspect, embodiments of the disclosure provide a negative sheet, which includes a negative current collector and a negative active layer. The negative active layer is disposed on a surface of the negative current collector, where the negative active layer includes the negative active particle described in embodiments of the disclosure.

Further, a compacted density *ρ* of the negative active layer satisfies 1.4g/cm³ ≤ *ρ* ≤ 1.7g/cm³, and a porosity *P* of the negative active layer satisfies 10% ≤ *P* ≤ 42%.

Further, a peel-off strength *σ* between the negative active layer and the negative current collector satisfies 5N/m ≤ *σ* ≤ 20N/m.

In a fourth aspect, embodiments of the disclosure provide a cell, which includes an electrolyte, a positive sheet, a separator, and the negative sheet described in embodiments of the disclosure. The positive sheet is immersed in the electrolyte. The separator is located at one side of the positive sheet and is immersed in the electrolyte. The negative sheet is disposed at one side of the separator away from the positive sheet and is immersed in the electrolyte.

In the disclosure, the aspect ratio *α* of each of the multiple pores of the negative active particle is designed to satisfy 1 ≤ *α* ≤ 8, so that a cell having the negative active particle has a high dynamic performance and a high initial efficiency.

### BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a diagram of an application scenario of an energy storage system provided in an embodiment of the disclosure.
FIG. 2 is a schematic structural diagram of an energy storage system provided in an embodiment of the disclosure.
FIG. 3 is a circuit block diagram of an energy storage system provided in an embodiment of the disclosure.
FIG. 4 is a partial perspective schematic structural view of an electricity-consumption system provided in an embodiment of the disclosure.
FIG. 5 is a schematic structural view of an energy storage apparatus provided in an embodiment of the disclosure.
FIG. 6 is a schematic structural view of a cell provided in an embodiment of the disclosure.
FIG. 7 is a schematic cross-sectional view of the cell provided in the embodiment of the disclosure, taken along line A-A illustrated in FIG. 6.
FIG. 8 is a schematic cross-sectional view of the positive sheet provided in the embodiment of the disclosure, taken along line A-A illustrated in FIG. 6.
FIG. 9 is a schematic cross-sectional view of the negative sheet provided in the embodiment of the disclosure, taken along line A-A illustrated in FIG. 6.
FIG. 10 is a schematic structural view of a negative active particle provided in an embodiment of the disclosure.
FIG. 11 is an enlarged view of dash box I in FIG. 10.
FIG. 12 is a schematic flow chart of a preparation method for a negative active particle provided in an embodiment of the disclosure.
FIG. 13 is a schematic flow chart of the graphitization treatment in preparing a negative active particle provided in the embodiment of the disclosure.
FIG. 14 is a scanning electron microscope (SEM) image of a cross-section of the negative active particle provided in example 5 of the disclosure.
FIG. 15 is a direct current resistance (DCR)-state of charge (SOC) line graph of cells in example 5 and comparative example 2 of the disclosure.

Explanation of reference signs: 100 - energy storage system, 110 - electrical energy conversion apparatus, 130 - electricity-consumption load, 200 - energy storage apparatus, 210 - box, 300 - electricity-consumption system, 310 - electricity-consumption device, 400 - cell, 410 - positive sheet, 411 - positive current collector, 412 - positive active layer, 420 - separator, 430 - negative sheet, 431 - negative current collector, 432 - negative active layer, 440 - housing, 450 - electrolyte, 500 - negative active particle, 510 - pore.

### DETAILED DESCRIPTION

In order to make those of ordinary skill in the art better understand the solutions of the disclosure, the following will illustrate technical solutions of embodiments of the disclosure clearly and completely with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The terms "first", "second", and the like in the description, claims of the present disclosure, and the above accompanying drawings are used for distinguishing different objects, rather than for describing a specific order. In addition, the terms "include", "have", and any variations thereof are intended to cover non-exclusive inclusions. For example, a process, method, system, product, or apparatus that includes a series of steps or units is not limited to the listed steps or units, but optionally further includes steps or units not listed, or optionally further includes other steps or units inherent to the process, method, product, or apparatus.

The technical solutions of embodiments of the disclosure will be illustrated in the following with reference to the accompanying drawings.

It is to be noted that, for convenience of illustration, the same reference sign of the accompanying drawings represents the same component in embodiments of the disclosure, and for sake of simplicity, detailed illustration of the same component is omitted in different embodiments.

At present, generation of green electrical energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further cause loss of the electric power. Therefore, "abandoned wind and abandoned light" may occur due to insufficient power demand or insufficient power-grid admitting ability, and energy storage is required to solve these problems. That is, electrical energy is stored by converting it into other forms of energy by physical or chemical means, and energy is released by converting it into electrical energy when needed. In brief, energy storage is similar to a large "power bank", which stores electrical energy when photovoltaics and wind energy are sufficient and releases stored electric power when needed.

Taking electrochemical energy storage as an example, an energy storage device is provided in the disclosure. The energy storage device includes chemical batteries. Chemical elements in the chemical batteries are used as an energy storage medium to implement a charging/discharging process through chemical reaction or change of the energy storage medium. In brief, electrical energy generated by solar energy and wind energy is stored in the chemical batteries. When the usage of external electrical energy reaches a peak, the power stored in the chemical batteries is released for use, or is transferred to a place where the power is scarce for reuse.

At present, energy storage may be applied in various application scenarios, including power-generation-side energy storage, grid-side energy storage, renewable energy grid-connected energy storage, user-side energy storage, etc. Corresponding types of energy storage devices include the following.

(1) A large-sized energy storage container applied in a grid-side energy-storage scenario. The energy storage container may serve as a high-quality active and reactive regulation power source in the grid, which can realize matching of electric energy loads in time and space, enhance the capacity for integration of renewable energy, and is of great significance in the backup of the grid system, relieving the pressure of power supply at a peak load, and peak shaving and frequency modulation.

(2) A small and medium-sized energy storage cabinet applied in a user-side industrial and commercial energy-storage scenario (banks, shopping malls, and the like), as well as a small-sized household energy storage box applied in a user-side household energy storage scenario, which mainly operate in a "peak shaving and valley filling" mode. Based on the demand for electricity, there may be a significant price difference in electricity prices at peak and valley periods. In order to reduce cost, an energy storage cabinet/box may be charged during an electricity-price valley period, and the electricity in the energy storage device may be released for use during the electricity-price peak period to save electricity cost. Additionally, in remote areas and regions prone to natural disasters such as earthquakes and hurricanes, household energy storage devices can serve as a backup power supply for users and the power grid, eliminating the inconvenience caused by frequent power outages due to disasters or other reasons.

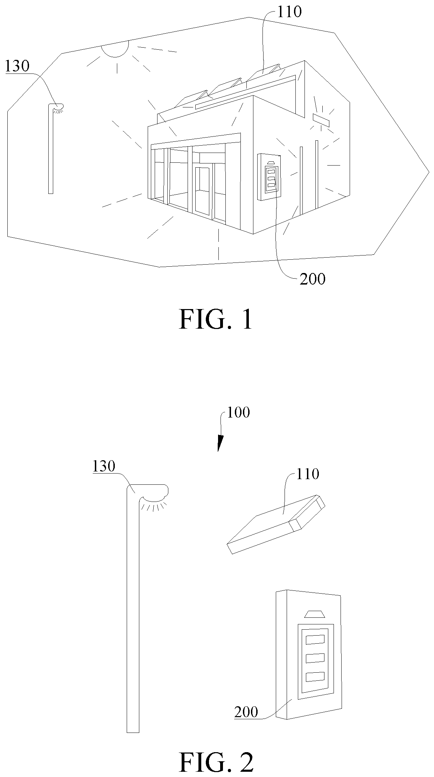

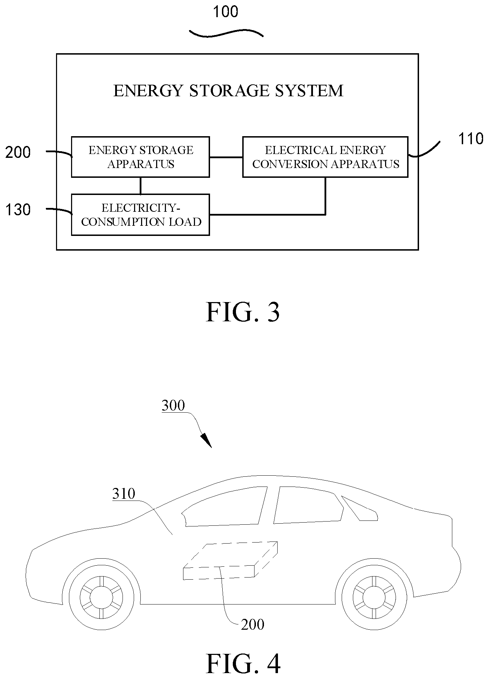

FIG. 1 is a diagram of an application scenario of an energy storage system 100 provided in an embodiment of the disclosure. For illustrative purpose, the embodiment of FIG. 1 of the disclosure is a household energy storage scenario in the user-side energy storage. An energy storage apparatus 200 of the disclosure is not limited to the household energy storage scenario. FIG. 2 is a schematic structural diagram of the energy storage system 100 provided in an embodiment of the disclosure. FIG. 3 is a circuit block diagram of the energy storage system 100 provided in an embodiment of the disclosure.

Reference is made to FIG. 1 to FIG. 3, the disclosure provides an energy storage system 100. The energy storage system 100 is a household energy storage system 100. The energy storage system 100 includes an electrical energy conversion apparatus 110, an energy storage apparatus 200, and an electricity-consumption load 130. The electrical energy conversion apparatus 110 is configured to convert energy other than electrical energy into electrical energy. The energy storage device 200 is electrically connected to the electrical energy conversion apparatus 110 and is configured to store electrical energy of the electrical energy conversion apparatus 110. The electricity-consumption load 130 is respectively electrically connected to the electrical energy conversion apparatus 110 and the energy storage apparatus 200, and configured to operate by using the electrical energy of the electrical energy conversion apparatus 110 or the electrical energy of the energy storage apparatus 200. It may be understood that, part of the electrical energy converted by the electrical energy conversion apparatus 110 can be stored in the energy storage apparatus 200, and the other part of the electrical energy converted by the electrical energy conversion apparatus 110 can be used to power the electricity-consumption load 130. The energy storage apparatus 200 is configured to store electrical energy, and supply the electrical energy to the electricity-consumption load 130 during the electricity-price peak period. The energy storage system 100 can convert energy other than electrical energy into electrical energy, and can also store the electrical energy in the energy storage apparatus 200, thereby supplying sufficient electrical energy to the electricity-consumption load 130.

Optionally, the electrical energy conversion apparatus 110 may convert at least one of solar energy, optical energy, wind energy, thermal energy, tidal energy, biomass energy, or mechanical energy into electrical energy, to provide a stable power supply for the electricity-consumption load 130 and the energy storage apparatus 200.

Optionally, the electrical energy conversion apparatus 110 may be a photovoltaic panel. The photovoltaic panel may convert solar energy into electrical energy during the electricity-price valley period, and store the electrical energy in the energy storage apparatus 200. In other embodiments, the electrical energy conversion apparatus 110 may also be at least one of a wind energy power-generation apparatus, a thermal energy power-generation apparatus, a tidal energy power-generation apparatus, a biomass energy power-generation apparatus, or a mechanical energy power-generation apparatus.

Optionally, the energy storage apparatus 200 may be a small-sized energy storage box, and can be mounted on an outdoor wall by means of wall mounting. In other embodiments, the energy storage apparatus 200 may also be a large-sized energy storage container, a battery applied to an electronic device, or the like.

Optionally, the electricity-consumption load 130 may be a street lamp, a household appliance, a motor vehicle, or the like. The energy storage apparatus 200 is configured to store the electrical energy, and to supply the electrical energy to the street lamp and the household appliance during the electricity-price peak period, or to supply power during power outages/ blackouts.

It may be understood that the energy storage apparatus 200 may include, but is not limited to, at least one of a cell, a battery module, a battery pack, a battery system, or the like. The cell may be, but not limited to, at least one of a cylindrical cell, a prismatic cell, or the like.

It may be understood that, the drawings in the embodiments are only schematic forms of the energy storage system 100, and should not be construed as limitations to the energy storage system 100 provided in the disclosure, nor should it be construed as limitations to the energy storage apparatus 200 provided in each embodiment of the disclosure.

Reference is made to FIG. 4, which is a partial perspective schematic structural view of an electricity-consumption system 300 provided in an embodiment of the disclosure. The embodiment of the disclosure further provides an electricity-consumption system 300, which includes an electricity-consumption device 310 and an energy storage apparatus 200. The energy storage apparatus 200 is configured to supply power to the electricity-consumption device 310.

The electricity-consumption device 310 in the embodiments of the disclosure may be, but is not limited to, a cell phone, a tablet computer, a laptop, a desktop computer, a smart bracelet, a smart watch, an e-reader, and a game console, and other portable electronic devices. It may also be an automobile, a truck, a sedan, a van, a freight car, a train, a highspeed train, an electric automatic vehicle, and other transportation tools. In addition, it may also be a household appliance such as a refrigerator, an electric light, an air conditioner. It may be understood that the electricity-consumption device 310 illustrated in the drawings of the disclosure is merely one form of the electricity-consumption device 310, and should not be understood as limitations to the electricity-consumption device 310 provided in the disclosure.

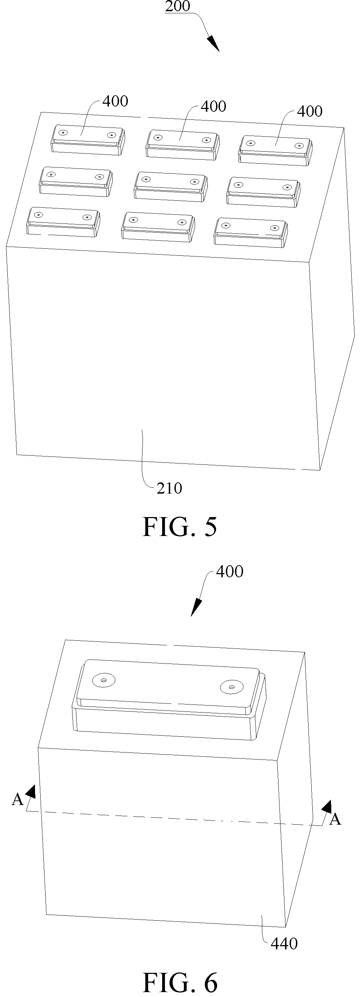

Reference is made to FIG. 5, an embodiment of the disclosure further provides an energy storage apparatus 200, and the energy storage apparatus 200 includes a box 210 and multiple cells 400. The multiple cells 400 are stacked and accommodated in the box 210.

Optionally, the cell 400 may be but is not limited to a lithium-ion secondary cell, a lithium-ion primary cell, a lithium-sulfur cell, a sodium lithium-ion cell, a sodium-ion cell, a magnesium-ion cell, an energy storage cell, etc.

The term "multiple" or "a plurality of" refers to greater than or equal to two.

It may be understood that, the multiple cells 400 in the energy storage apparatus 200 may be connected in series or parallel, or may be connected in series in part and connected in parallel in part (that is, connected in both series and parallel). The connection between the multiple cells 400 in the same energy storage apparatus 200 will not be specifically limited in the disclosure.

It may be understood that, the box 210 has an accommodating chamber(s), and the multiple cells 400 are accommodated in the accommodating chamber. In some embodiments, each accommodating chamber accommodates one cell 400. In other embodiments, each accommodating chamber accommodates multiple cells 400.

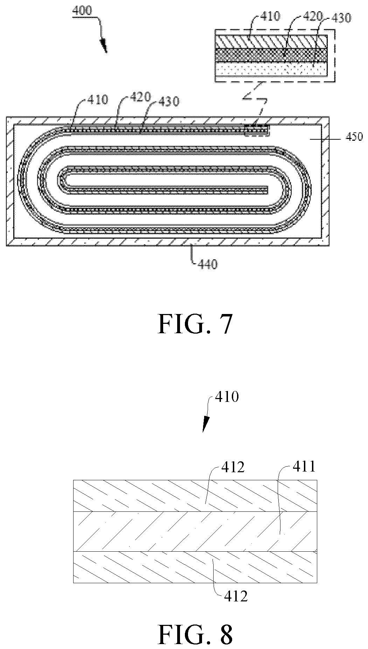

Reference is made to FIG. 6 and FIG. 7, an embodiment of the disclosure further provides a cell 400, which includes an electrolyte 450, a positive sheet 410, a separator 420, and a negative sheet 430. The positive sheet 410 is immersed in the electrolyte 450. The separator 420 is located at one side of the positive sheet 410 and is immersed in the electrolyte 450. The negative sheet 430 is disposed at one side of the separator 420 away from the positive sheet 410 and is immersed in the electrolyte 450.

It may be understood that, the positive sheet 410, the separator 420, and the negative sheet 430 are sequentially stacked to form an electrode assembly. The electrode assembly may be of, but is not limited to, a wound structure, a laminated structure, etc., which is not specifically limited in the disclosure.

Optionally, the electrolyte 450 includes an electrolyte salt, an additive, and an organic solvent.

Optionally, the electrolyte salt is a lithium salt, which may include, but is not limited to at least one of lithium hexafluorophosphate (LiPF₆), lithium bis(fluorosulfonyl)imide (LiFSI), etc.

Optionally, the organic solvent may include, but not limited to at least one of ethylene carbonate (EC), propylene carbonate (PC), diethyl carbonate (DEC), ethyl methyl carbonate (EMC), dimethyl carbonate (DMC), diethylene glycol dimethyl ether (DEGDME), ethylene glycol dimethyl ether (DME), 1,3-dioxolane (DOL), etc.

Optionally, the additives may include, but are not limited to at least one of vinylene carbonate (VC) and fluoroethylene carbonate (FEC), etc.

Reference is made to FIG. 8, optionally, the positive sheet 410 includes a positive current collector 411 and a positive active layer 412. The positive active layer 412 is disposed on a surface of the positive current collector 411. It may be understood that, the positive active layer 412 may cover one surface or two opposite surfaces of the positive current collector 411.

Optionally, the positive current collector 411 may be, but is not limited to an aluminum sheet.

Optionally, the positive active layer 412 includes positive active particles, a first conductive agent, and a first binder. Optionally, the positive active particles may be, but are not limited to lithium iron phosphate. The first conductive agent may be, but is not limited to, conductive carbon black. The first binder may be, but is not limited to, polyvinylidene fluoride (PVDF).

Optionally, the separator 420 may be, but is not limited to at least one of a polypropylene film (PP film), polyethylene film (PE film), a ceramic separator, etc.

Optionally, the cell 400 further includes a housing 440 for accommodating the electrolyte 450, the positive sheet 410, the separator 420, and the negative sheet 430.

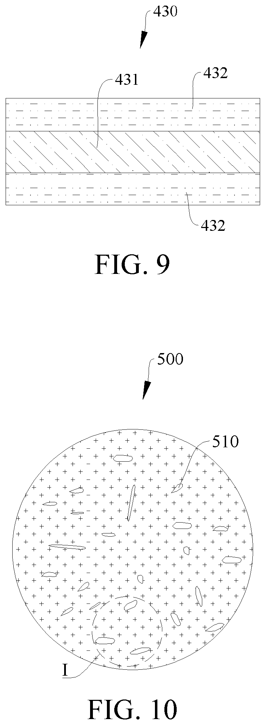

Reference is made to FIG. 9, and an embodiment of the disclosure further provides a negative sheet 430, including a negative current collector 431 and a negative active layer 432. The negative active layer 432 is disposed on a surface of the negative current collector 431. The negative active layer 432 includes negative active particles 500 (as illustrated in FIG. 10).

It may be understood that, the negative active layer 432 may cover one surface or two opposite surfaces of the negative current collector 431.

Optionally, the negative current collector 431 may be, but is not limited to, a copper sheet.

Optionally, the negative active layer 432 further includes a second conductive agent, a second binder, and a thickener. Optionally, the second conductive agent may be, but is not limited to, conductive carbon black (Super P, SP). The second binder may be, but is not limited to, styrene-butadiene latex or styrene-butadiene rubber (SBR). The thickener may be, but is not limited to, sodium carboxymethyl cellulose (CMC).

In some embodiments, a compacted density *ρ* of the negative active layer 432 satisfies 1.4g/cm³ ≤ *ρ* ≤ 1.7g/cm³. Specifically, the compacted density *ρ* may be, but is not limited to, 1.4 g/cm³, 1.45 g/cm³, 1.5 g/cm³, 1.55 g/cm³, 1.6 g/cm³, 1.65 g/cm³, 1.7 g/cm³, etc. If the compacted density *ρ* of the negative active layer 432 is too high, the negative active layer 432 becomes difficult to be infiltrated in the electrolyte 450, leading to lithium-plating and a rapid decline in the cycle life of the cell 400. Conversely, if the compacted density *ρ* of the negative active layer 432 is too low, the energy density of the cell 400 decreases, which increases the unit manufacturing cost of the cell 400. When the compacted density *ρ* of the negative active layer 432 satisfies 1.4g/cm³ ≤ *ρ* ≤ 1.7g/cm³, the cell 400 has a high cycling capacity retention rate and a low unit manufacturing cost.

In some embodiments, a porosity *P* of the negative active layer 432 satisfies 10% ≤ *P* ≤ 42%. Specifically, the porosity *P* of the negative active layer 432 may be, but is not limited to, 10%, 13%, 15%, 18%, 20%, 23%, 25%, 28%, 30%, 33%, 35%, 38%, 40%, 42%, etc. If the porosity *P* of the negative active layer 432 is too small, the negative active layer 432 becomes difficult to be infiltrated in the electrolyte 450, leading to lithium-plating and a rapid decline in the cycle life of the cell 400. Conversely, if the porosity *P* of the negative active layer 432 is too large, the energy density of the cell 400 decreases, which increases the unit manufacturing cost of the cell 400. When the porosity *P* of the negative active layer 432 satisfies 10% ≤ *P* ≤ 42%, the cell 400 has a high cycling capacity retention rate and a low unit manufacturing cost.

Furthermore, the porosity *P* of the negative active layer 432 satisfies 15% ≤ *P* ≤ 37%. When the porosity *P* of the negative active layer 432 is in this range, the cell 400 has a high cycling capacity retention rate and a low unit manufacturing cost.

In some embodiments, a peel-off strength *σ* between the negative active layer 432 and the negative current collector 431 satisfies 5 newton per meter (N/m) ≤ *σ* ≤ 20N/m. Specifically, the peel-off strength *σ* between the negative active layer 432 and the negative current collector 431 may be, but is not limited to, 5N/m, 8N/m, 10N/m, 12N/m, 14N/m, 16N/m, 18N/m, 20N/m, etc. If the peel-off strength *σ* between the negative active layer 432 and the negative current collector 431 is too small, pulverization or slagging of the negative active layer 432 may easily occur in use, leading to a rapid decrease in the cycle life of the cell 400. If the peel-off strength *σ* between the negative active layer 432 and the negative current collector 431 is too large, excessive binder may be needed, which increases the internal resistance of the cell 400 and reduces the cycle life of the cell 400. When the peel-off strength *σ* between the negative active layer 432 and the negative current collector 431 satisfies 5N/m ≤ *σ* ≤ 20N/m, the cell 400 is less prone to slagging in use and has a high cycling capacity retention rate.

In some embodiments, the peel-off strength *σ* between the negative active layer 432 and the negative current collector 431 satisfies 7N/m ≤ *σ* ≤ 16N/m. When the peel-off strength *σ* between the negative active layer 432 and the negative current collector 431 is in this range, the cell 400 is less prone to slagging and has a high cycling capacity retention rate.

Reference is made to FIG. 10, an embodiment of the disclosure further provides a negative active particle 500, which has multiple pores 510. The aspect ratio *α* of each of the multiple pores 510 satisfies 1 ≤ *α* ≤ 8.

It may be understood that the multiple pores 510 are distributed irregularly or randomly in the negative active particle 500.

It is to be noted that the aspect ratio of each of the multiple pores 510 is a ratio of the length to the width of each of the multiple pores 510. The length of each of the multiple pores 510 refers to the maximum length *L* of each of the multiple pores 510, and the width of each of the multiple pores 510 refers to the maximum width *w* in a direction parallel to a direction perpendicular to a direction of the maximum length of each of the multiple pores 510. That is, *α = L* / *w.*

Optionally, the negative active particle 500 may be, but is not limited to, graphite particle.

Specifically, the aspect ratio *α* of each of the multiple pores 510 may be, but is not limited to, 1, 2, 3, 4, 5, 6, 7, 8, etc. If the aspect ratio *α* of each of the multiple pores 510 is too small, the dynamic performance of the negative active particle 500 is reduced, thereby reducing the dynamic performance of the cell 400. If the aspect ratio *α* of each of the multiple pores 510 is too large, the specific surface area of the negative active particle 500 increases, which reduces the initial efficiency of the cell 400. When the aspect ratio *α* of each of the multiple pores 510 satisfies 1 ≤ *α* ≤ 8, the cell 400 has a high dynamic performance and a high initial efficiency.

In the disclosure, the aspect ratio *α* of each of the multiple pores 510 of the negative active particle 500 is designed to satisfy 1 ≤ *α* ≤ 8, so that the cell 400 having the negative active particle 500 has a high dynamic performance and a high initial efficiency.

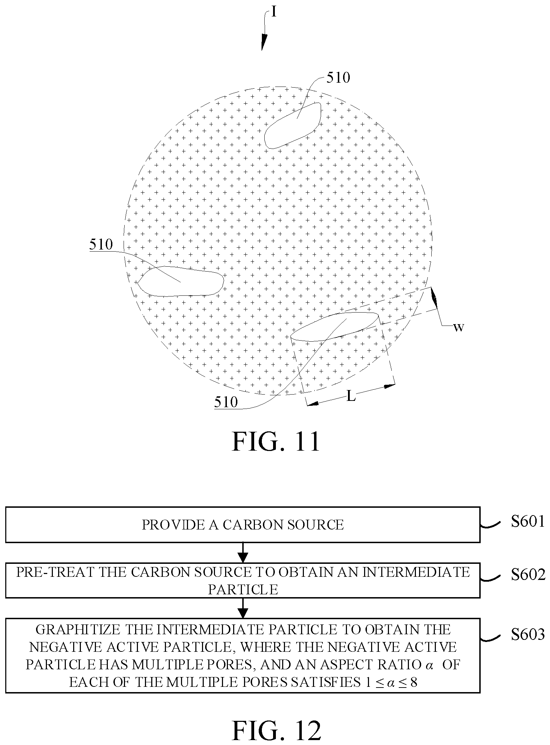

Reference is made to FIG. 11, in some embodiments, the maximum length *L* of each of the multiple pores 510 satisfies 0.1µm ≤ *L* ≤ 2.5µm. Specifically, the maximum length *L* may be, but is not limited to 0.1µm, 0.2µm, 0.4µm, 0.6µm, 0.8µm, 1.0µm, 1.2µm, 1.4µm, 1.6µm, 1.8µm, 2.0µm, 2.2µm, 2.4µm, 2.5µm, etc. If the maximum length *L* of each of the multiple pores 510 is too long, the negative active particle 500 is easily crushed when the negative active layer 432 is compacted. In this case, if the compacted pressure on the negative active layer 432 is reduced, the compacted density of the negative active layer 432 is reduced, thereby reducing the energy density of the cell 400 and increasing the unit manufacturing cost of the cell 400. If the maximum length *L* of each of the multiple pores 510 is too short, it indicates that most of the multiple pores 510 of the negative active particle 500 are mostly nanoscale pores 510, which leads to an increase in the specific surface area of the negative active particle 500. In this case, during the film-forming reaction, more active lithium needs to be consumed, thereby increasing the active lithium consumption of the negative active particle 500 and reducing the initial efficiency of the cell 400. When the maximum length *L* of each of the multiple pores 510 satisfies 0.1µm ≤ *L* ≤ 2.5µm, the negative active layer 432 of the cell 400 has a more suitable compacted density, which leads to a low unit manufacturing cost of the cell 400. In addition, the cell 400 may be prevented from consuming excessive active lithium during the film-forming reaction.

Unless otherwise specified, the "film-forming" described in the disclosure refers to the film-forming of a solid electrolyte interface film (SEI film).

In some embodiments, the maximum width *w* of each of the multiple pores 510 satisfies 0.1µm ≤ *w* ≤ 2.5µm in the direction parallel to the direction perpendicular to the direction of the maximum length of each of the multiple pores 510. Specifically, in the direction parallel to the direction perpendicular to the direction of the maximum length of each of the multiple pores 510, the maximum width *w* of each of the multiple pores 510 may be, but is not limited to 0.1µm, 0.2µm, 0.4µm, 0.6µm, 0.8µm, 1.0µm, 1.2µm, 1.4µm, 1.6µm, 1.8µm, 2.0µm, 2.2µm, 2.4µm, 2.5µm, etc. If the maximum width *w* of each of the multiple pores 510 is too long, the negative active particle 500 is easily crushed when the negative active layer 432 is compacted. In this case, if the compacted pressure on the negative active layer 432 is reduced, the compacted density of the negative active layer 432 is reduced, thereby reducing the energy density of the cell 400 and increasing the unit manufacturing cost of the cell 400. If the maximum width *w* of each of the multiple pores 510 is too short, it indicates that most of the multiple pores 510 of the negative active particle 500 are mostly nanoscale pores 510, which leads to an increase in the specific surface area of the negative active particle 500. In this case, during the film-forming reaction, more active lithium needs to be consumed, thereby increasing the active lithium consumption of the negative active particle 500 and reducing the initial efficiency of the cell 400. When the maximum length *L* of each of the multiple pores 510 satisfies 0.1µm ≤ *L* ≤ 2.5µm, the negative active layer 432 of the cell 400 has a more suitable compacted density, which leads to a low unit manufacturing cost of the cell 400. In addition, the cell 400 may be prevented from consuming excessive active lithium during the film-forming reaction.

In some embodiments, the negative active particle 500 has a predetermined cross-section, and an area of the predetermined cross-section of the negative active particle 500 is *s*. A total area covered by the multiple pores 510 on the predetermined cross-section is *s'*, where 0.01 ≤ *s'ls* ≤ 0.06. Specifically, *s'ls* may be, but is not limited to, 0.01, 0.02, 0.03, 0.04, 0.05, 0.06, etc. If *s*'/*s* is too large, it indicates that the multiple pores 510 are densely distributed on the predetermined cross-section. In this case, the specific surface area of the negative active particle 500 is large, and during the film-forming reaction, the consumption of active lithium increases, thereby reducing the initial efficiency of cell 400. If *s'*/*s* is too small, it indicates that the multiple pores 510 in the predetermined cross-section of the negative active particle 500 is sparsely distributed. In this case, channels for lithium-ions to move are insufficient, which leads to a decrease of the movement rate of lithium-ions, thereby reducing the dynamic performance of the negative active layer 432. Insufficient dynamic performance of the negative active layer 432 may easily lead to lithium-plating. When the ratio of the total area covered by the multiple pores 510 on the predetermined cross-section to the area of the predetermined cross-section satisfies 0.01 ≤ *s'*/*s* ≤ 0.06, the cell 400 having the negative active particle 500 has a good dynamic performance, which is less prone to lithium-plating, and thus has a high initial efficiency.

It may be understood that, in the embodiment of the disclosure, the predetermined cross-section of the negative active particle 500 may be a cross-section of the negative active particle 500 in any direction or any angle, all of which satisfy 0.01 ≤ *s*'/*s* ≤ 0.06. In other words, the predetermined cross-section is any cross-section or section of the negative active particle 500.

In some embodiments, the area *s* of the predetermined cross-section satisfies 0.5µm² ≤ *s* ≤ 400µm². Specifically, the area *s* of the predetermined cross-section may be, but is not limited to, 0.5µm², 1µm², 3µm², 5µm², 10µm², 30µm², 50µm², 80µm², 100µm², 150µM², 200µm², 250µm², 300µm², 350µm², 400µm², etc. If the area *s* of the predetermined cross-section is too small, it indicates the presence of powders with small particle size in the negative active particles 500, which reduces the initial efficiency of the cell 400 having the negative active particle 500 and deteriorates the high-temperature electrical performance of the cell 400 having the negative active particle 500. If the area *s* of the predetermined cross-section is too large, it indicates the presence of particles with large particle size in the negative active particles 500, which poses difficulties for the processing of the negative sheet 430 (for example, it may lead to scratches during the coating process and pressed marks during the rolling process). When the area *s* of the predetermined cross-section satisfies 0.5µm² ≤ *s* ≤ 400µm², the cell 400 having the negative active particle 500 has a high initial efficiency and a good high-temperature performance, and the negative sheet 430 having the negative active particle 500 has a good processing performance.

Furthermore, the area *s* of the predetermined cross-section satisfies 5µm² ≤ *s* ≤ 350µm². When the area *s* of the predetermined cross-section is in this range, the cell 400 having the negative active particle 500 has a high initial efficiency and a good high-temperature performance, and the negative sheet 430 having the negative active particle 500 has a good processing performance.

Furthermore, the area *s* of the predetermined cross-section satisfies 15µm² ≤ *s* ≤ 300µm². When the area *s* of the predetermined cross-section is in this range, the cell 400 having the negative active particle 500 has a high initial efficiency and a good high-temperature performance, and the negative sheet 430 having the negative active particle 500 has a good processing performance.

Furthermore, the area *s* of the predetermined cross-section satisfies 30µm² ≤ *s* ≤ 200µm². When the area *s* of the predetermined cross-section is in this range, the cell 400 having the negative active particle 500 has a high initial efficiency and a good high-temperature performance, and the negative sheet 430 having the negative active particle 500 has a good processing performance.

In some embodiments, the total area *s*' covered by the multiple pores 510 on the predetermined cross-section satisfies 0.005µm² ≤ *s*' ≤ 24µm². Specifically, the total area *s*' covered by the multiple pores 510 on the predetermined cross-section may be, but is not limited to, 0.005µm², 0.01µm², 0.05µm², 0.1µm², 0.5µm², 1µm², 2µm², 5µm², 8µm², 10µm², 12µm², 15µm², 18µm², 20µm², 22µm², 24µm², etc. If the total area *s*' covered by the multiple pores 510 on the predetermined cross-section is too small, it indicates that there are insufficient pores 510 distributed in the negative active particle 500, which affects the dynamic performance of the negative active particle 500. If the total area *s*' covered by the multiple pores 510 on the predetermined cross-section is too large, it indicates that there are excessive pores 510 distributed in the negative active particle 500, which results in excessive consumption of active lithium of the cell 400 having the negative active particle 500 during the formation of the SEI film, thereby affecting the initial efficiency of cell 400 and reducing the electrical performance of the cell 400. When the total area *s*' covered by the multiple pores 510 on the predetermined cross-section satisfies 0.005µm² ≤ *s*' ≤ 24µm², the cell 400 having the negative active particle 500 has a good dynamic performance and a high initial efficiency.

Furthermore, the total area *s*' covered by the multiple pores 510 on the predetermined cross-section satisfies 0.05µm² ≤ *s*' ≤ 20µm². In this case, the cell 400 having the negative active particle 500 has a good dynamic performance and a high initial efficiency.

Furthermore, the total area *s*' covered by the multiple pores 510 on the predetermined cross-section satisfies 1µm² ≤ *s*' ≤ 17µm². In this case, the cell 400 having the negative active particle 500 has a good dynamic performance and a high initial efficiency.

Optionally, the particle size of the negative active particle 500 ranges from 8µm to 13µm. Specifically, the particle size of the negative active particle 500 may be, but is not limited to, 8µm, 8.5µm, 9µm, 9.5µm, 10µm, 10.5µm, 11µm, 11.5µm, 12µm, 12.5µm, 13µm, etc. If the particle size of the negative active particle 500 is too small, it may reduce the initial efficiency of the cell 400 having the negative active particle 500 and deteriorate the high-temperature electrical performance of the cell 400 having these negative active particles 500. If the particle size of the negative active particle 500 is too large, it may pose difficulties for the processing of the negative sheet 430 (for example, it may lead to scratches during the coating process and pressed marks during the rolling process).

The negative active particle 500 provided in this embodiment of the disclosure may be prepared through the method of the following embodiments of the disclosure. In addition, the negative active particle 500 may be prepared through other methods, and embodiments of the disclosure merely provide one or more preparation methods for the negative active particle 500, which should not be understood as a limitation to the negative active particle 500 provided in embodiments of the disclosure.

Reference is made to FIG. 12. Embodiments of the disclosure further provide a preparation method for a negative active particle 500. The preparation method includes the following.

At 601, a carbon source is provided.

Optionally, the carbon source may be, but is not limited to at least one of a petroleum coke, a coal char, etc.

Optionally, a mass fraction of sulfur (S) in the carbon source ranges from 1.5% to 2.0%. Specifically, the mass fraction of sulfur in the carbon source may be, but is not limited to, 1.5%, 1.6%, 1.7%, 1.8%, 1.9%, 2.0%, etc. When the mass fraction of sulfur in the carbon source is too low, the length of each of the pores 510 in the negative active particle 500 will be too long, and the aspect ratio of each of the pores 510 will be too large, resulting in a high specific surface area of the prepared negative active particle 500 and a decrease in the initial efficiency of the cell 400. When the mass fraction of sulfur in the carbon source is too high, the length of each of the pores 510 in the negative active particle 500 will be too short, and the aspect ratio of each of the pores 510 will be too small, resulting in a decrease in the dynamic performance of the negative active particle 500, thereby reducing the dynamic performance of the cell 400.

In embodiments of the disclosure, unless specified otherwise, a value in a range from *a* to *b* means that the value may be any value between *a* and *b,* or may be *a* or *b.*

Optionally, the carbon source is granular, and the particle size of the carbon source ranges from 8µm to 13µm. Specifically, the particle size of the carbon source may be, but is not limited to, 8µm, 8.5µm, 9µm, 9.5µm, 10µm, 10.5µm, 11µm, 11.5µm, 12µm, 12.5µm, 13µm, etc. If the particle size of the carbon source is too small, the prepared negative active particle 500 may have small particle size, thereby reducing the initial efficiency of the cell 400 having the negative active particle 500 and deteriorating the high-temperature electrical performance of the cell 400 having the negative active particle 500. If the particle size of the carbon source is too large, the prepared negative active particle 500 may have large particle size, thereby posing difficulties for the processing of the negative sheet 430 (for example, it may lead to scratches during the coating process and pressed marks during the rolling process).

At S602, the carbon source is pre-treated to obtain an intermediate particle.

Optionally, the carbon source is pre-treated at a temperature of 400°C to 600°C for a duration of 4h to 6h.

Optionally, the temperature of the pre-treatment may be, but is not limited to, 400°C, 420°C, 440°C, 460°C, 480°C, 500°C, 520°C, 550°C, 560°C, 580°C, 600°C, etc. If the temperature of the pre-treatment is too low, the light components in the carbon source cannot be well vaporized, resulting in insufficient pores 510 in the negative active particles 500 and an uneven distribution of the pores 510 in the negative active particles 500, which reduces the cycling capacity retention rate of the cell 400 having the negative active particle 500. If the temperature of the pre-treatment is too high, the formed intermediate particle is easily pre-oxidized, making the intermediate particle to be oxidized in a higher degree during graphitization. In this case, the negative active particle 500 obtained in the end has excessive pores 510, which reduces the initial efficiency of the cell 400 having the negative active particle 500.

Optionally, the duration of the pre-treatment may be, but is not limited to, 4h, 4.5h, 5h, 5.5h, 6h, etc.

At S603, the intermediate particle is graphitized to obtain the negative active particle 500, where the negative active particle 500 has multiple pores 510, and an aspect ratio *α* of each of the multiple pores 510 satisfies 1 ≤ *α* ≤ 8.

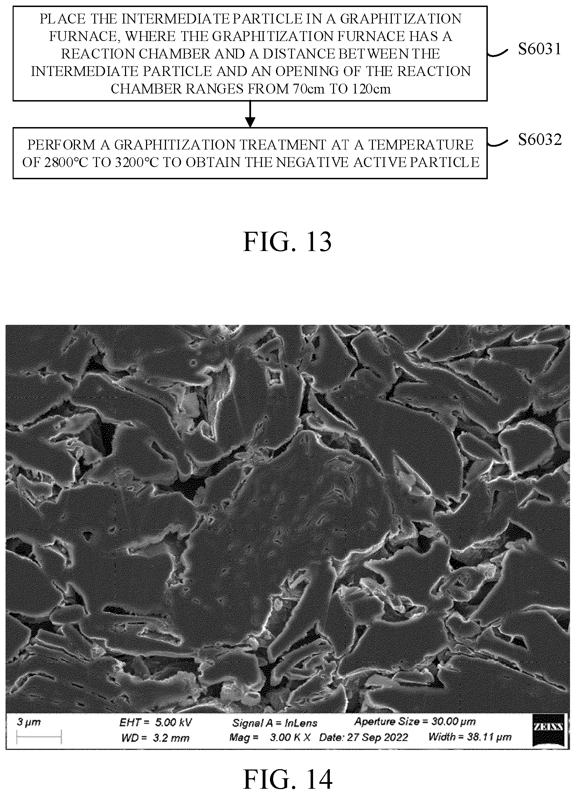

Reference is made to FIG. 13. Optionally, the intermediate particle is graphitized to obtain the negative active particle 500 as follows.

At 6031, the intermediate particle is placed in a graphitization furnace, where the graphitization furnace has a reaction chamber and a distance between the intermediate particle and an opening of the reaction chamber ranges from 70cm to 120cm.

Specifically, the distance between the intermediate particle and the opening of the reaction chamber may be, but is not limited to, 70cm, 75cm, 80cm, 85cm, 90cm, 95cm, 100cm, 105cm, 110cm, 115cm, 120cm, etc. If the distance between the intermediate particle and the opening of the reaction chamber is too small, the intermediate particle will be oxidized acutely, which increases the density of the pores 510 of the negative active particle 500, thereby reducing the initial efficiency and the cycling capacity retention rate of the cell 400 having the negative active particle 500. If the distance between the intermediate particle and the opening of the reaction chamber is too large, the prepared negative active particles 500 may have insufficient pores 510, which leads to a high gram capacity of the prepared negative active particle 500, resulting in a poor dynamic performance of the cell 400 having the negative active particle 500.

At S6032, a graphitization treatment is performed at a temperature of 2800°C to 3200°C to obtain the negative active particle 500.

Specifically, the temperature of the graphitization treatment may be, but is not limited to 2800°C, 2850°C, 2900°C, 2950°C, 3000°C, 3050°C, 3150°C, 3200°C, etc. If the temperature of the graphitization treatment is too low, the gram capacity of the prepared negative active particle 500 will be too low, which is not conducive to improving the energy density of the cell 400 having the negative active particle 500. If the temperature of the graphitization treatment is too high, the gram capacity of the prepared negative active particle 500 will be too high, resulting in a poor dynamic performance of the cell 400 having the negative active particle 500.

Optionally, the duration of the graphitization treatment ranges from 24h to 48h. Specifically, the duration of the graphitization treatment may be, but is not limited to, 24h, 27h, 30h, 33h, 36h, 39h, 42h, 45h, 48h, etc.

The negative active particle 500 provide in the disclosure will be further described in the following specific examples.

### Example 1

The negative active particle 500 is prepared through the following operations.
(1) A petroleum coke (carbon source) is provided, where the mass fraction of sulfur in the petroleum coke is 1.5%, and the particle size of the petroleum coke is 9µm.
(2) The petroleum coke is pre-treated at a temperature of 500°C to obtain an intermediate petroleum coke (the intermediate particle), where the duration of the pre-treatment is 5h.
(3) The intermediate petroleum coke is placed in a graphitization furnace, where a distance between the intermediate petroleum coke and an opening of a reaction chamber of the graphitization furnace is 70cm. A graphitization treatment is performed on the intermediate petroleum coke at a temperature of 3000°C for a duration of 36h, to obtain a graphite particle (the negative active particle 500).

### Example 2

The negative active particle 500 is prepared through the following operations.
(1) A petroleum coke (carbon source) is provided, where the mass fraction of sulfur in the petroleum coke is 1.6%, and the particle size of the petroleum coke is 10µm.
(2) The petroleum coke is pre-treated at a temperature of 500°C to obtain an intermediate petroleum coke (the intermediate particle), where the duration of the pre-treatment is 5h.
(3) The intermediate petroleum coke is placed in a graphitization furnace, where a distance between the intermediate petroleum coke and an opening of a reaction chamber of the graphitization furnace is 85cm. A graphitization treatment is performed on the intermediate petroleum coke at a temperature of 3000°C for a duration of 36h, to obtain a graphite particle (the negative active particle 500).

### Example 3

The negative active particle 500 is prepared through the following operations.
(1) A petroleum coke (carbon source) is provided, where the mass fraction of sulfur in the petroleum coke is 1.7%, and the particle size of the petroleum coke is 11µm.
(2) The petroleum coke is pre-treated at a temperature of 500°C to obtain an intermediate petroleum coke (the intermediate particle), where the duration of the pre-treatment is 5h.
(3) The intermediate petroleum coke is placed in a graphitization furnace, where a distance between the intermediate petroleum coke and an opening of a reaction chamber of the graphitization furnace is 96cm. A graphitization treatment is performed on the intermediate petroleum coke at a temperature of 3000°C for a duration of 36h, to obtain a graphite particle (the negative active particle 500).

### Example 4

The negative active particle 500 is prepared through the following operations.
(1) A petroleum coke (carbon source) is provided, where the mass fraction of sulfur in the petroleum coke is 1.8%, and the particle size of the petroleum coke is 12µm.
(2) The petroleum coke is pre-treated at a temperature of 500°C to obtain an intermediate petroleum coke (the intermediate particle), where the duration of the pre-treatment is 5h.
(3) The intermediate petroleum coke is placed in a graphitization furnace, where a distance between the intermediate petroleum coke and an opening of a reaction chamber of the graphitization furnace is 105cm. A graphitization treatment is performed on the intermediate petroleum coke at a temperature of 3000°C for a duration of 36h, to obtain a graphite particle (the negative active particle 500).

### Example 5

The negative active particle 500 is prepared through the following operations.
(1) A petroleum coke (carbon source) is provided, where the mass fraction of sulfur in the petroleum coke is 2.0%, and the particle size of the petroleum coke is 12µm.
(2) The petroleum coke is pre-treated at a temperature of 500°C to obtain an intermediate petroleum coke (the intermediate particle), where the duration of the pre-treatment is 5h.
(3) The intermediate petroleum coke is placed in a graphitization furnace, where a distance between the intermediate petroleum coke and an opening of a reaction chamber of the graphitization furnace is 120cm. A graphitization treatment is performed on the intermediate petroleum coke at a temperature of 3000°C for a duration of 36h, to obtain a graphite particle (the negative active particle 500).

### Comparative example 1

The negative active particle 500 is prepared through the following operations.
(1) A petroleum coke (carbon source) is provided, where the mass fraction of sulfur in the petroleum coke is 2.2%, and the particle size of the petroleum coke is 11µm.
(2) The petroleum coke is pre-treated at a temperature of 500°C to obtain an intermediate petroleum coke (the intermediate particle), where the duration of the pre-treatment is 5h.
(3) The intermediate petroleum coke is placed in a graphitization furnace, where a distance between the intermediate petroleum coke and an opening of a reaction chamber of the graphitization furnace is 35cm. A graphitization treatment is performed on the intermediate petroleum coke at a temperature of 3000°C for a duration of 36h, to obtain a graphite particle (the negative active particle 500).

### Comparative example 2

The negative active particle 500 is prepared through the following operations.
(1) A petroleum coke (carbon source) is provided, where the mass fraction of sulfur in the petroleum coke is 1.2%, and the particle size of the petroleum coke is 11µm.
(2) The petroleum coke is pre-treated at a temperature of 500°C to obtain an intermediate petroleum coke (the intermediate particle), where the duration of the pre-treatment is 5h.
(3) The intermediate petroleum coke is placed in a graphitization furnace, where a distance between the intermediate petroleum coke and an opening of a reaction chamber of the graphitization furnace is 160cm. A graphitization treatment is performed on the intermediate petroleum coke at a temperature of 3000°C for a duration of 36h, to obtain a graphite particle (the negative active particle 500).

### Comparative example 3

The negative active particle 500 is prepared through the following operations.
(1) A petroleum coke (carbon source) is provided, where the mass fraction of sulfur in the petroleum coke is 2.6%, and the particle size of the petroleum coke is 11µm.
(2) The petroleum coke is pre-treated at a temperature of 500°C to obtain an intermediate petroleum coke (the intermediate particle), where the duration of the pre-treatment is 5h.
(3) The intermediate petroleum coke is placed in a graphitization furnace, where a distance between the intermediate petroleum coke and an opening of a reaction chamber of the graphitization furnace is 15cm. A graphitization treatment is performed on the intermediate petroleum coke at a temperature of 3000°C for a duration of 36h, to obtain a graphite particle (the negative active particle 500).

The negative active particles 500 of the examples and the comparative examples are separately used to prepared the cells 400.

The cell 400 of each of the examples and each of the comparative examples includes an electrolyte 450, a positive sheet 410, a separator 420, and the negative sheet 430. The positive sheet 410, the separator 420, and the negative sheet 430 form an electrode assembly, which is wound and immersed in the electrolyte 450.

The negative sheet 430 includes a copper foil (negative current collector 431) and negative active layers 432 disposed on two opposite surfaces of the copper foil. The negative active layer 432 includes graphite particles (negative active particles 500), and the graphite particles have pores 510. The parameters of the graphite particles and the pores 510 of each example and each comparative example are illustrated in table 1 below. The thickness of the negative sheet 430 is 119µm, the thickness of the copper foil is 8µm, and the thickness of each negative active layer 432 is 55.5µm.

The positive sheet 410 includes an aluminum foil (positive current collector 411) and positive active layers 412 disposed on two opposite surfaces of the aluminum foil. The positive active layer 412 includes lithium-iron phosphate (positive active particles). The thickness of the positive sheet 410 is 162µm, the thickness of the aluminum foil is 13µm, and the thickness of each positive active layer 412 is 74.5µm.

The electrolyte 450 includes LiPF₆ (lithium salt) and an organic solvent. The molar concentration of LiPF₆ in the electrolyte 450 is 1mol/L. The organic solvent is a mixed solvent of EC, EMC, and DEC at a volume ratio of 1:1:1. The separator 420 is a PP separator 420.

For each of the cells 400 prepared using the negative active particles 500 of the above examples and comparative examples, a cycling performance test is performed.
(1) A cycling performance test is carried as follows. At 25°C, each of the cells 400 of the above examples and comparative examples is charged at a constant power of 1P until the voltage reaches 3.65V, and then each of the cells 400 is discharged at the constant power of 1P until the voltage reaches 2.5V. The discharge capacity is recorded as an initial capacity. This process is repeated until the capacity of the lithium cell 400 is less than 70% of the initial capacity, and the number of cycles is recorded.
(2) A measurement of the length *L* and the aspect ratio *α* of each of the pores 510 of the negative active particle 500 is carried as follows. A scanning electron microscope (SEM) image of the cross-section of the negative active particle 500 is obtained, and the SEM image is imported into the Nano measurer software. A corresponding measuring scale is read, and the longest distance *L* and the widest distance of the pore of the negative active particle 500 are measured to calculate the range of aspect ratio *α* of the negative active particle 500. The SEM image of the cross-section of the negative active particle 500 in example 5 is illustrated in FIG. 14.

**Table 1: performance parameters of examples and comparative examples**

| Examples | Maximum length *L* of the pores 510 of the graphite particle (µm) | *α* | Area *s*' covered by pores on the predetermined cross-section of the graphite particle (µm²) | *s'*/*s* | 500 cycles capacity retention rate (%) |
|---|---|---|---|---|---|
| Example 1 | 0.2 | 1 | 1.12 | 0.01 | 98.4 |
| Example 2 | 1.2 | 3.2 | 1.15 | 0.03 | 98.7 |
| Example 3 | 1.8 | 5.4 | 2.31 | 0.04 | 99.5 |
| Example 4 | 2.3 | 6.3 | 3.15 | 0.05 | 98.6 |
| Example 5 | 2.5 | 8 | 4.23 | 0.06 | 98.3 |
| Comparative example 1 | 3.2 | 9 | 2.15 | 0.05 | 80.3 |
| Comparative example 2 | 2.7 | 4.3 | 1.26 | 0.008 | 79.2 |
| Comparative example 3 | 2.9 | 7.1 | 2.37 | 0.07 | 79.5 |

From the test data of examples 1 to 5 in table 1, it can be seen that when the aspect ratio of each of the pores 510 of the negative active particle 500 (graphite particle) satisfies 1 ≤ *α* ≤ 8 and the predetermined cross-section of the graphite particle satisfies 0.01 ≤ *s'*/*s* ≤ 0.06, the cell 400 having the graphite particle has a high cycling capacity retention rate. After 500 cycles, the cycling capacity retention rate is still above 98.3%.

According to the test data of the comparative example 1, when the length of each of the pores 510 of the graphite particle is too long, the cycling capacity retention rate of the cell 400 decreases.

According to the test data of the comparative example 2, when the length of each of the pores 510 of the graphite particle is long and *s'ls* is small, the cycling capacity retention rate of the cell 400 decreases.

According to the test data of the comparative example 3, when the length of each of the pores 510 of the graphite particle is long and *s'ls* is large, the cycling capacity retention rate of the cell 400 decreases.

(3) An impedance test is carried as follows. The cell 400 is fully charged and fully discharged at the rated capacity for two times, and the discharge capacity in the last time is recorded as C₀. The fully discharged cell 400 is charged to 90% state of charge (SOC) at a current of a value of 0.1C₀ for 9 cycles, and corresponding resistance values are recorded.

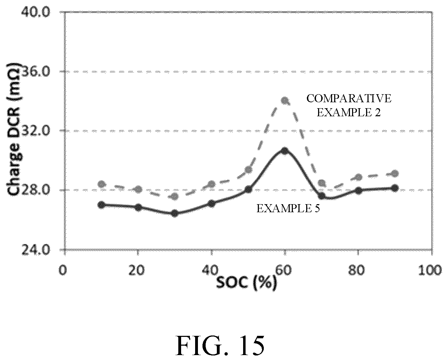

Dynamic performance tests are conducted on the cell 400 of the example 5 and the cell 400 of the comparative example 2, and an impedance-SOC line graph is illustrated in FIG. 15. It may be seen from FIG. 15 that, the cell 400 of the example 5 has a lower impedance compared to the cell 400 of the comparative example 2. It indicates that when the size of the pore 510 of the graphite particle is designed within the scope provided in the disclosure, the cell 400 can have a lower impedance and a better dynamic cycling performance.

The terms of "embodiment" and "implementation" mentioned in the present disclosure means that the specific features, structures, or characteristics described with reference to the embodiments may be encompassed in at least one embodiment of the present disclosure. The phrase at various locations in the specification does not necessarily refer to the same embodiment, or an independent or alternative embodiment exclusive of another embodiment. Those skilled in the art should understand explicitly and implicitly that the embodiments described in the present disclosure may be combined with other embodiments. In addition, it should also be understood that the features, structures or characteristics described in the embodiments of the present disclosure may be combined as desired to obtain embodiments without departing from the spirit and scope of the technical solution of the present disclosure if there is no contradiction between the embodiments.

Finally, it should be noted that the above embodiments are merely used for illustrating rather than limiting the technical solutions of the present disclosure; and although the present disclosure has been described in detail with reference to the preferred embodiments, those skilled in the art should understand that modifications or equivalent substitutions may be made to the technical solutions of the present disclosure without departing from the spirit and scope of the technical solutions of the present disclosure.

## Claims

1. A negative active particle (500), wherein the negative active particle (500) has a plurality of pores (510), and an aspect ratio *α* of each of the plurality of pores (510) satisfies 1 ≤ *α* ≤ 8.

2. The negative active particle (500) of claim 1, wherein a maximum length *L* of each of the plurality of the pores (510) satisfies 0.1µm ≤ *L* ≤ 2.5µm.

3. The negative active particle (500) of claim 1 or 2, wherein a maximum width *w* of each of the plurality of the pores (510) satisfies 0.1µm ≤ *w* ≤ 2.5µm in a direction parallel to a direction perpendicular to a direction of a maximum length of each of the plurality of pores (510).

4. The negative active particle (500) of any one of claims 1 to 3, wherein the negative active particle (500) has a predetermined cross-section, an area of the predetermined cross-section of the negative active particle (500) is *s*, and a total area covered by the plurality of pores (510) on the predetermined cross-section is s', wherein 0.01 ≤ *s'*/*s* ≤ 0.06.

5. The negative active particle (500) of claim 4, wherein the area *s* of the predetermined cross-section satisfies 0.5µm² ≤ *s* ≤ 400µm².

6. The negative active particle (500) of claim 4, wherein the total area *s*' covered by the plurality of pores (510) on the predetermined cross-section satisfies 0.005µm² ≤ *s*' ≤ 24µm².

7. A preparation method for a negative active particle, comprising:
providing (S601) a carbon source;
pre-treating (S602) the carbon source to obtain an intermediate particle; and
graphitizing (S603) the intermediate particle to obtain the negative active particle,
wherein the negative active particle has a plurality of pores, and an aspect ratio *α* of each of the plurality of pores satisfies 1 ≤ *α* ≤ 8.

8. The preparation method for a negative active particle of claim 7, wherein a mass fraction of sulfur in the carbon source ranges from 1.5% to 2.0%.

9. The preparation method for a negative active particle of claim 7 or 8, wherein graphitizing the intermediate particle to obtain the negative active particle comprises:
placing (S6031) the intermediate particle in a graphitization furnace, wherein the graphitization furnace has a reaction chamber and a distance between the intermediate particle and an opening of the reaction chamber ranges from 70cm to 120cm; and
performing (S6032) a graphitization treatment at a temperature of 2800°C to 3200°C to obtain the negative active particle.

10. A negative sheet (430), comprising:
a negative current collector (431); and
a negative active layer (432) disposed on a surface of the negative current collector (431), wherein the negative active layer (432) comprises the negative active particle (500) of any one of claims 1 to 6.

11. The negative sheet (430) of claim 10, wherein a compacted density *ρ* of the negative active layer (432) satisfies 1.4g/cm³ ≤ *ρ* ≤ 1.7g/cm³, and a porosity *P* of the negative active layer (432) satisfies 10% ≤ *P* ≤ 42%.

12. The negative sheet (430) of claim 10 or 11, wherein a peel-off strength *σ* between the negative active layer (432) and the negative current collector (431) satisfies 5N/m ≤ *σ* ≤ 20N/m.

13. A cell (400), comprising:
an electrolyte (450);
a positive sheet (410) immersed in the electrolyte (450);
a separator (420) located at one side of the positive sheet (410) and immersed in the electrolyte (450); and
the negative sheet (430) of any one of claims 10 to 12, wherein the negative sheet (430) is disposed at one side of the separator (420) away from the positive sheet (410) and is immersed in the electrolyte (450).
